(19) Europäisches Patentamt

European Patent Office

Office européen des brevets

(11) EP 1 233 468 A2

(12) **EUROPEAN PATENT APPLICATION**

(43) Date of publication:
21.08.2002 Bulletin 2002/34

(51) Int Cl.⁷: **H01M 8/04**, H01M 8/06, H01M 16/00, B60L 11/18

(21) Application number: 02075164.0

(22) Date of filing: 16.01.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: 15.02.2001 US 784522

(71) Applicant: **Delphi Technologies, Inc.**
**Troy, MI 48007 (US)**

(72) Inventors:
• **Grieve, Malcolm James**
**Fairport, NY 14450 (US)**

• **Mukerjee, Subhasish**
**Rochester, NY 14618 (US)**
• **Noetzel, John**
**Fairport, NY 14450 (US)**
• **DeJohn, Charles R.**
**Rochester, NY 14624 (US)**
• **Husted, Larry L.**
**Kokomo, IN 46902 (US)**

(74) Representative: **Denton, Michael John et al**
**Delphi Automotive Systems,**
**Centre Technique Paris,**
**117, avenue des Nations,**
**B.P. 60059**
**95972 Roissy Charles de Gaulle Cédex (FR)**

(54) **A fuel cell and battery voltage controlling method in a hybrid fuel cell/battery system**

(57) A method for controlling a fuel cell system is disclosed. One embodiment of the method comprises supplying an amount of fuel and an amount of oxidant to a fuel cell stack. The amount of fuel supplied to the fuel cell stack is controlled to attain a desired voltage output, such that the desired voltage is at least partially based upon an input current and voltage for a battery in electrical communication with the fuel cell stack. A vehicle power system is also disclosed.

Fig.4.

## Description

BACKGROUND

A fuel cell is an energy conversion device that generates electricity and heat by electrochemically combining a gaseous fuel, such as hydrogen, carbon monoxide, or a hydrocarbon, and an oxidant, such as air or oxygen, across an ion-conducting electrolyte. The fuel cell converts chemical energy into electrical energy. A fuel cell generally consists of two electrodes positioned on opposite sides of an electrolyte. The oxidant passes over the oxygen electrode (cathode) while the fuel passes over the fuel electrode (anode), generating electricity, water, and heat. There are several types of fuel cells, including proton exchange membrane (PEM) fuel cells and solid oxide fuel cells (SOFC).

A SOFC is constructed entirely of solid-state materials, utilizing an ion conductive oxide ceramic as the electrolyte. A SOFC operates at high temperatures (e.g., temperatures of about -40°C up to about 1,200°C). A conventional electrochemical cell in a SOFC is comprised of an anode and a cathode with an electrolyte disposed therebetween. In a SOFC, a fuel flows to the anode where it is oxidized by oxygen ions from the electrolyte, producing electrons that are released to the external circuit, and mostly water and carbon dioxide are removed in the fuel flow stream. At the cathode, the oxidant accepts electrons from the external circuit to form oxygen ions. The oxygen ions migrate across the electrolyte to the anode. The flow of electrons through the external circuit provides for consumable or storable electrical power. However, each individual electrochemical cell generates a relatively small voltage. Higher voltages are attained by electrically connecting a plurality of electrochemical cells in series to form a stack.

A battery is an important part of the SOFC auxiliary power unit (APU). The battery provides power for starting the automobile and powering the electrical system when the engine is off or when current requirements exceed the available current from the SOFC. The battery also provides electrical power for blowers, sensors, actuators, and controls during the startup of the SOFC. Additionally, the battery provides a buffer for load transitions to allow the SOFC to respond to the load changes more slowly.

SUMMARY

The drawbacks and disadvantages of the prior art are overcome by the strategies for linking a battery with a solid oxide fuel cell.

A method for controlling a fuel cell system is disclosed. The method comprises supplying an amount of fuel and an amount of oxidant to a fuel cell stack. The amount of fuel supplied to the fuel cell stack is controlled to attain a desired voltage output, such that the desired voltage is at least partially based upon an input current and voltage for a battery in electrical communication with the fuel cell stack.

A method for controlling a fuel cell system is disclosed. The method comprises supplying an amount of fuel and an amount of oxidant to a fuel cell stack and producing electricity. The electricity is modulated to attain a desired voltage, such that the desired voltage is at least partially based upon an input current and voltage for a battery in electrical communication with the fuel cell stack.

A method for controlling a fuel cell system is disclosed. The method comprises supplying an amount of fuel and an amount of oxidant to a fuel cell stack. The amount of oxidant supplied to the fuel cell stack is controlled to attain a desired voltage output, such that the desired voltage is at least partially based upon an input current and voltage for a battery in electrical communication with the fuel cell stack

A method for controlling a fuel cell system is disclosed. The method comprises supplying an amount of fuel and an amount of oxidant to a fuel cell stack and producing electricity. The electrical load drawn on the fuel cell stack is managed to attain a desired voltage, such that the desired voltage is at least partially based upon an input current and voltage for a battery in electrical communication with the fuel cell stack.

A vehicle power system is disclosed. The vehicle power system comprises a fuel supply and an oxidant supply in fluid communication with a fuel cell and a battery disposed in direct electrical communication with the fuel cell.

The above described and other features are exemplified by the following figures and detailed description.

BRIEF DESCRIPTION OF THE DRAWINGS

Referring now to the figures, wherein like elements are numbered alike:

Figure 1 a schematic of an exemplary embodiment of an auxiliary power unit including a 42 volt air conditioning system;
Figure 2 is a polarization curve for a SOFC and a voltage current curve for a low impedance battery;
Figure 3 are voltage curves for the change in concentrations of hydrogen or oxygen;
Figure 4 is a schematic of an electrical system including a SOFC stack;
Figure 5 is a graph of electrical load request versus time;
Figure 6 is a graph of flow rate versus time;
Figure 7 is a graph of battery load versus time;
Figure 8 is a graph of transistor pulse width modulation versus time; and
Figure 9 is a graph of stack voltage versus time.

DETAILED DESCRIPTION

To meet the emission needs of automobiles, fuel cells have begun to help power vehicles. Fuel cells can provide an instant source of electrical power to meet the needs of automobiles, however fuel cells still rely on a battery to provide the necessary power to aid in startup and transient load leveling.

Generally, a fuel cell system may comprise at least one solid oxide fuel cell (SOFC), an engine, one or more heat exchangers, and optionally, one or more compressors, an exhaust turbine, a catalytic converter, preheating device, plasmatron, electrical source (e.g., battery, capacitor, motor/generator, turbine, and the like, as well as combinations comprising at least one of the foregoing electrical sources), and conventional connections, wiring, control valves, and a multiplicity of electrical loads, including, but not limited to, lights, resistive heaters, blowers, air conditioning compressors, starter motors, traction motors, computer systems, radio/stereo systems, and a multiplicity of sensors and actuators, and the like, as well as conventional components.

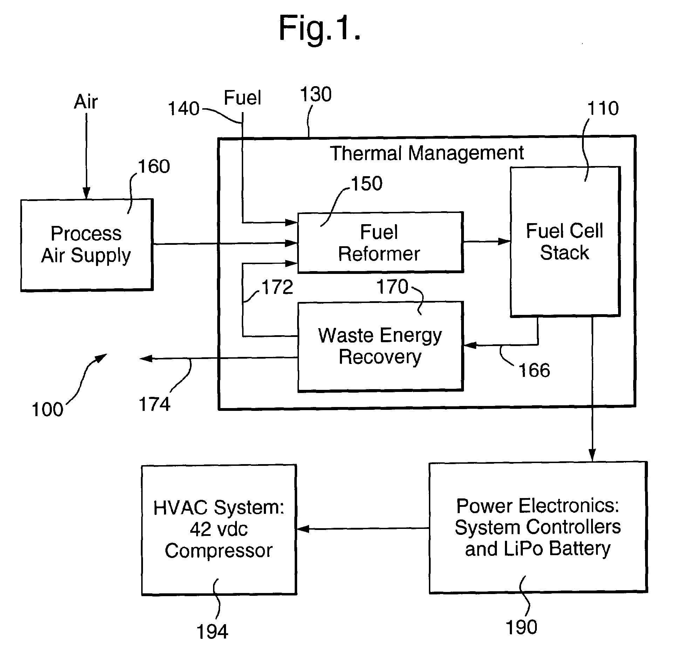

Referring now to Figure 1, an auxiliary power unit (APU) 100 is schematically depicted. The APU 100 comprises a fuel cell stack 110, preferably a SOFC stack 111, contained within an enclosure 130 for thermal management (also referred to as a "hot box"). The SOFC stack 111, which may comprise a plurality of modular SOFC stacks, is optionally connected to a fuel source 140 through a reformer 150, and a process air supply 160.

The reformer 150 is generally located within the enclosure 130 and can be thermally isolated from the SOFC stack 111 (e.g., a segmented enclosure, isolated enclosure, or the like). Reforming converts a hydrocarbon fuel (such as gasoline) or an oxygenated fuel (such as methanol) into hydrogen ($H_2$) and byproducts (e.g., carbon monoxide (CO) and carbon dioxide ($CO_2$)). Common approaches include steam reforming, partial oxidation, and dry reforming, and the like.

Thermal energy from unreacted and spent fuel 166 can be recovered in a waste energy recovery system 170, which can recycle fuel and heat 172 to a reformer 150 and can also discharge reaction products 174 (e.g., water and carbon dioxide). In the alternative, some or all of the unreacted and spent fuel 166 can be introduced to an engine (not shown) or a turbine (not shown) for energy recovery.

Electrical energy from the SOFC stack 111 is captured in a power electronics system 190. The power electronics system 190 generally comprises one or more system controllers and one or more batteries, such as a lithium battery. A 40-volt lithium battery is preferred due to the increased power to weight ratio and the high current capability for charge and discharge as compared to a traditional non-lithium 40-volt battery. However, it is understood that various types of batteries can be employed. The battery provides power for starting the automobile engine; powers the electrical system, including, but not limited to, high draw loads such as an air conditioning compressor, when the engine is off or when the current requirements exceed the current available from the SOFC stack; provides electrical power to devices associated with the SOFC stack including, but not limited to, blowers, sensors, actuators, controls, and other devices associated with the SOFC stack during start-up; and buffers load transients, allowing the SOFC stack to respond to load changes more slowly.

Various electrical loads can be powered through the power electronics system 190. These electrical loads can be powered directly from the electrical energy from the SOFC stack 111, from stored electrical energy in one or more batteries, or a combination of the two power sources. One such load comprises a heating, ventilation, and air conditioning (HVAC) system 194, which may include a compressor, such as a 42-volt powered compressor. The various electrical loads may comprise any electrical loads, including, but not limited to, lights, resistive heaters, blowers, starter motors, traction motors, computer systems, radio/stereo systems, a multiplicity of sensors and actuators, among others, and combinations comprising at least one of the foregoing electrical loads.

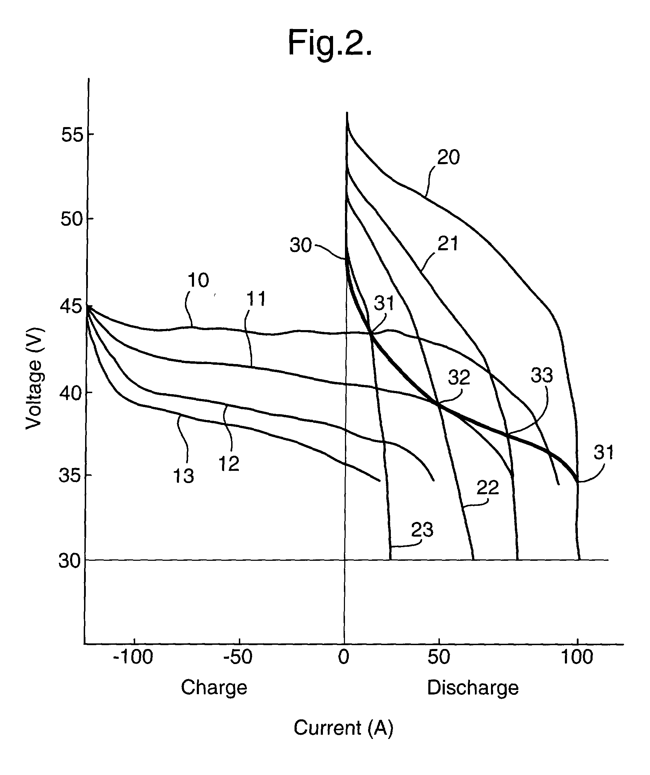

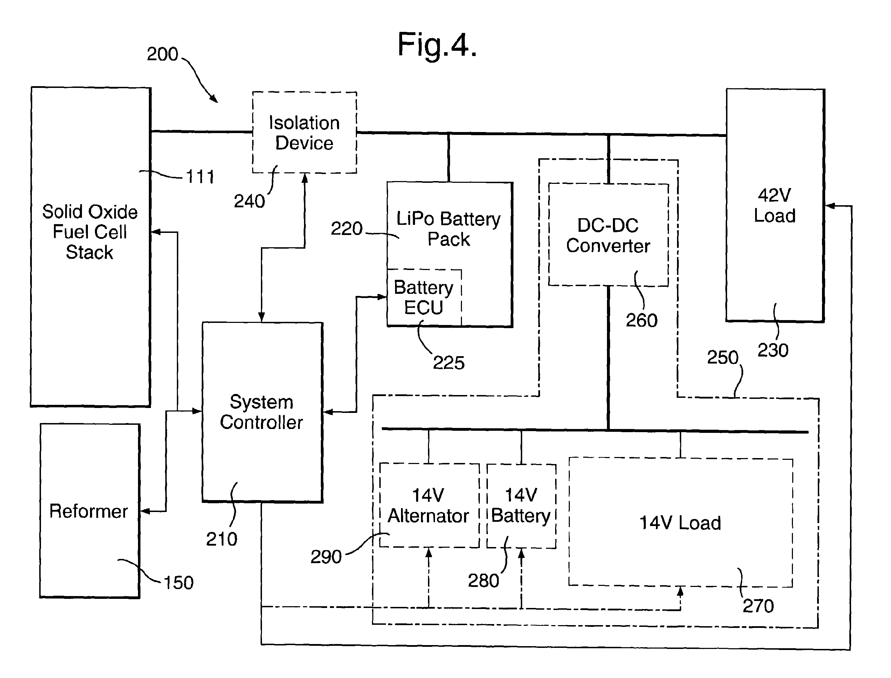

Generally, the voltage and current output of the SOFC does not match the voltage and current requirements of the battery, as illustrated in Figure 2. Figure 2 illustrates a family of curves for a low impedance battery with line 10 representing a fully charged battery and lines 11, 12, 13 representing the progression of discharging a battery. A family of curves for a SOFC stack is also illustrated, with line 20 representing the highest voltage achievable (e.g., by employing high concentrations and flow rates of fuel and oxidant) and lines 21, 22, 23 representing progressively lower concentrations and flow rates of fuel and oxidant. The normal operating range for a low impedance battery of 40 volts nominal is, for example, about 35 volts to about 43 volts. A fuel cell can have a range of operating voltage greater than or less than a low impedance battery. Thus, connection of the SOFC to the lithium battery is difficult without the use of a converter. Various converters, such as buck-boost converters, can compensate for the voltage differential (e.g., at loads less than about 120 amperes). However, such converters may result in overall system losses, i.e., reduced system efficiency. Basically, for example, a buck-boost converter reduces (buck) or raises (boost) the voltage, generally from about 5% to about 20%. While this has proven to alleviate the voltage differential, buck-boost converters have a tendency to have parasitic discharge and are not cost effective.

Therefore, the SOFC voltage needs to be controlled (e.g., increased or decreased) to enable the electrical flow from the SOFC to the battery to be completed, while not placing either unit in an undesirable state (i.e., too high or too low a voltage). Various strategies can be implemented to allow connection of the SOFC to the battery under a wider range of load points, including: a) managing fuel utilization to lower the SOFC voltage (e.g., in a situation where electric loads are low and the battery is fully charged); b) managing air utilization to lower the SOFC voltage; c) using an isolating device to modulate the electrical connection to the battery; and/or d) managing electrical loads in the system (e.g., during the transition from connected to the bus to disconnected, or vice versa).

Voltage in fuel cell stacks is directly proportional to the concentrations of fuel species, as in hydrogen (in the anode) and oxygen (in the cathode), as depicted in the Nerst equation. For example, at the anode:

$$H_2 + \frac{1}{2}O_2 \Leftrightarrow H_2O$$

$$E = E^{\circ} + \frac{RT}{4F}\ln PO_2 + \frac{RT}{2F}\ln\frac{P_{H_2}}{P_{H_2O}}$$

where:

E = electromotive force
R = universal gas constant
F = Faraday constant
T = absolute temperature of the gas
$P_{H_2}$ = hydrogen partial pressure
$P_{H_2O}$ = water partial pressure

This concentration effect explains the functioning of both dilution of reformate and oxidant as well as higher fuel and higher oxygen utilization, as a means to control stack voltage.

The first strategy involves managing (or adjusting or controlling) the utilization of the fuel (or reformate) to the SOFC stack to allow connection at lighter loads. For example, the amount of reformate supplied to the SOFC stack is decreased to decrease the amount of voltage being produced by the SOFC stack at a given current level. This occurs due to polarization losses in the fuel cell with depleted concentrations of fuel components (particularly hydrogen) toward the anode exit. The decrease in SOFC voltage protects the battery from overcharge conditions without the need for a converter.

In the alternative, controlling the quality of the reformate can be completed by operating the reformer to produce a lower or higher concentration of fuel components in the reformate (i.e., by recycling anode exhaust (or effluent) or by changing the reactant (e.g., air or water (steam)) to fuel ratio). For example, by decreasing the fuel concentration in the reformate, the voltage in the SOFC stack can be decreased. The adjustment in the SOFC voltage allows for the electricity to flow to the battery without the need for a converter.

The second strategy involves managing (or adjusting or controlling) the utilization of the air (or oxidant) by "starving" the air side of the SOFC. For example, a valve can be electronically controlled to decrease the flow rate of air to the SOFC stack. This decrease in the flow rate of the oxidant to the SOFC stack (i.e., "starving" the air side) also causes the voltage output to decrease at a given current level. In the converse, increasing the air flow rate generally causes the voltage output to increase. The decreased voltage output of the SOFC is useful for operating loads having low current demand or when the battery can no longer accept charge. In the alternative, the flow of air can be diluted by recycling the depleted air. For example, the depleted air (e.g., from the unreacted oxygen and other air constituents) can be recycled from the cathode exhaust (or effluent) to the cathode inlet. This strategy is analogous to the first strategy with the exception of the depleted concentration of oxygen occurs toward the cathode exit. As is stated above, by decreasing the oxygen concentration in the air, the voltage in the SOFC stack can be decreased at a given current level. Conversely, increasing the air concentration generally causes the voltage output to increase at a given current level.

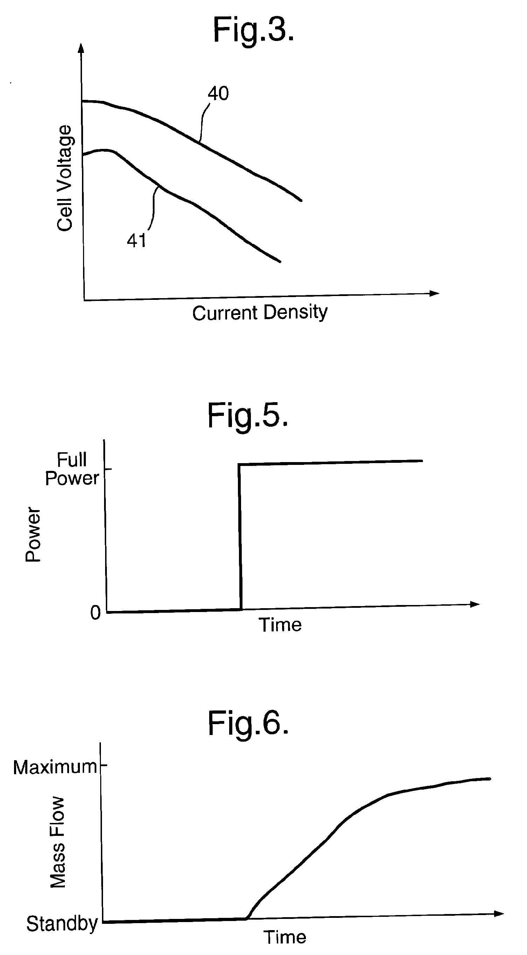

The results of these two strategies is illustrated in Figure 3. Figure 3 illustrates the trend observed with a change in the concentration of hydrogen in the reformate and/or the change in the concentration of oxygen in air. Line 40 illustrates a high hydrogen concentration or a high oxygen concentration that results in a higher voltage, while a drop in voltage occurs with lower concentrations of hydrogen or oxygen, as illustrated in line 41.

Referring again to Figure 2, by adjusting fuel and oxidant flow rates and concentrations, the fuel cell power output can be matched to the standby loads, such that the system voltage applied to those loads does not exceed the system specification limit of 48 volts at standby (or idle) as illustrated by point 30. When connected to the battery, the fuel and air flow rates and concentrations can be adjusted to allow a range of operating points, as illustrated by points 31, 32, 33 to the peak power point 34, that are voltage matched between the battery and fuel cell. The system loads (e.g., motors, resistors, compressors, blowers, lights, and the like) could be managed to match the available power from the fuel cell and the battery. The amount of available power would change as a function of battery state of charge. The system could provide a peak power equal to the battery power at the operating voltage and the fuel cell at the operating voltage, less operating loss. The continuous power can be limited to the fuel cell power output at the operating voltage, less operating loss.

The third strategy is the use of an isolation device to modulate the electrical connection to the battery, e.g., to pulse width modulate. Modulating an electrical connection is the changing in some characteristic way the amplitude, frequency, and/or phase of a wave. Pulse width modulation (PWM) is the switching of the device with the ability to vary the duty cycle to manage power flow. SOFC fluid management (i.e., management of fuel or air to the SOFC) provides very efficient power generation, as losses typically associated with voltage converters are minimized or eliminated. However, SOFC management may not provide sufficient transient response time to converge the SOFC voltage and the system voltage. Therefore, one or more isolation devices may be employed, alone or in combination with fluid management, to attain more rapid transient response when needed.

The isolation device provides the effect of a variable resistance between the SOFC and the battery. Such isolation devices may comprise pulse width modulation devices, transistors, converters, switches (e.g., relays, contactors, or other mechanical switch), resistors, and any combination comprising at least one of the foregoing devices. For example, a power transistor may be employed to pulse width modulate the connection, which may limit the average current or voltage output of the SOFC stack. Pulse width modulation is particularly useful during load transients wherein air and fuel management are slower to adjust to the new load conditions.

The last strategy is the managing of the electrical loads powered by the APU system. For example, the demand on the SOFC stack can be varied by managing the charge and discharge rate of a battery connected in the system. The management can optionally comprise controlling the electrical draw of on or more electrical loads on the SOFC (e.g., lights, resistive heaters, blowers, air conditioning compressors, starter motors, traction motors, computer systems, radio/stereo systems, and a multiplicity of sensors and actuators, among others). The amount of electrical draw is regulated to attain a desired voltage, e.g., a voltage that is compatible with charging the battery. Once the desire voltage is attained, the SOFC can be employed to charge the battery. In the case of a fully charged battery, additional charging could be damaging, therefore additional electrical loads can be applied and/or the SOFC voltage can be decreased.

One implementation of an electrical system 200 is schematically depicted in Figure 4. System 200 comprises the SOFC stack 111 and reformer 150 connected generally to a system controller 210. System controller 210 includes one or more controller(s), which may be analog, digital, or a combination of analog and digital controllers. Preferably, the system controller 210 comprises one or more microprocessors.

Electrical power generated from the SOFC stack 111 is bussed to a battery, such as a lithium battery pack 220, and an associated load, such as a 42-volt load 230. The lithium battery pack 220 may optionally comprise a battery electronic control unit 225 for controlling battery characteristics, such as voltage output, recharging functions, cell balancing, temperature control, diagnostic functions, and the like.

An isolation device 240 may also be provided (indicated in phantom lines as an optional component) to electrically disconnect the SOFC stack during warm-up and facilitate power manipulation of the power from the SOFC stack 111 under command of the system controller 210. As described above, SOFC fluid management may not provide sufficient transient response time to converge the SOFC voltage and the system voltage (e.g., to correspond to lithium battery pack 220 and the 42-volt load 230). Therefore, isolation device 240 may be employed to provide more rapid transient response when needed, which may comprise pulse width modulation devices, transistors, converters, switches (e.g., relays, contactors, or other mechanical switch), resistors, and any combination comprising at least one of the foregoing devices.

The system controller 210 includes the capability to provide SOFC fluid management and optionally controls for the isolation device 240. This is achieved by feedback control from one or more sensors and/or monitors placed at various locations within the system, depending on the required control. For example, one or more sensors and/or monitors may be connected to the SOFC stack 111 to determine various datum regarding the SOFC stack 111 including, but not limited to, the voltage output of the stack 111, the voltage drop between one or more individual cells within the stack 111, the power demand on the stack 111, the fuel flow rate, the fuel concentration, the air flow rate, the air concentration, the fuel utilization (i.e., the function of fuel converted into water and carbon dioxide within the stack 111), operating pressure, operating temperature, recycle flow rates for depleted reformate and depleted air, and combinations comprising at least one of the foregoing data. Furthermore, one or more sensors and/or monitors may be connected to the reformer 150 to determine various datum, such as fuel consumption rate, operating pressure, operating temperature, air consumption rate, reformate concentration, and combinations comprising at least one of the foregoing data.

The system controller 210 may also be connected to the isolation device 240, wherein one or more sensors and/or monitors may be connected to the isolation device 240 to determine various datum, such as voltage through the isolation device, current before the isolation device, voltage after the isolation device, current after the isolation device, temperature of the isolation device, and combinations comprising at least one of the foregoing data.

Further, one or more sensors and/or monitors may be connected to the battery 220 to determine various datum such as voltage output, power output, discharge rate, recharge rate, battery health, battery state of charge, battery temperature, individual cell voltages, and combinations comprising at least one of the foregoing data.

Additionally, sensors and/or monitors may be used to provide data regarding one or more aspects of the load 230. These sensors and/or monitors may be used to determine various datum such as power requirements, component health, priority of electrical loads, and combinations comprising at least one of the foregoing data.

The system controller 210 is thus capable of responding to various system conditions based on determinations made from the sensed and/or monitored data. As described above, the response may be in the form of SOFC fluid management, isolation, and/or load management.

Figure 4 also depicts an alternative system 200 further comprising a 14-volt electrical system 250 (indicated by phantom lines), resulting in a dual voltage system. A DC to DC converter 260 is included to provide suitable voltage levels to components of the 14-volt system 250 from the bus in electrical communication with the SOFC stack 111. The converted power is in electrical communication with a 14-volt load 270, which may comprise various electrical parts, including, but not limited to, lights, resistive heaters, blowers, air conditioning compressors, starter motors, traction motors, computer systems, radio/stereo systems, and a multiplicity of sensors and actuators, among others. Additionally, a 14-volt battery 280 and/or a 14-volt alternator 290 may be included in the system to provide energy independent from the SOFC stack 111 and the lithium battery 220. The 14-volt load 270, 14-volt battery 280, and/or the 14-volt alternator may be in operable communication (e. g., electrical, mechanical, and the like, as well as combinations comprising at least one of these communications) with the system controller 210 for various functionalities.

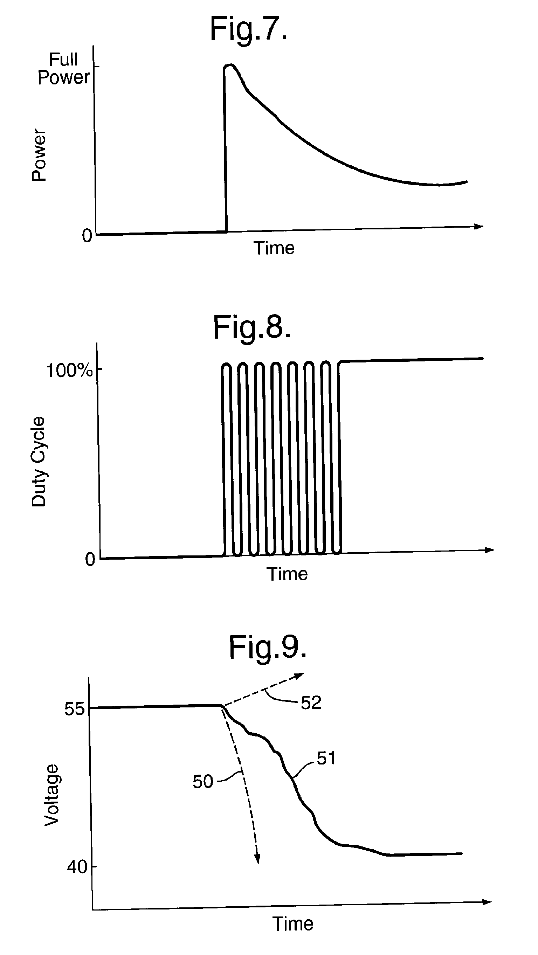

Figures 5-9 illustrate the curves for the electrical load request, reformate flow rate, battery load, transistor pulse width modulation, and stack voltage when applying the two strategies of adjusting the fuel amount and transistor pulse width modulation (PWM) in the connection of the SOFC stack to a load after a step change in desired power. If the SOFC stack is connected before sufficient reformate (and air) is available in the SOFC stack, the voltage would drop too low, as illustrated by arrow 50. If the reformate and air are introduced before the load, the voltage would spike too high, as illustrated by arrow 52. The coordination of reformate and air concentrations and flow rates, and the variable connection impedance provided by the pulse width modulation device will allow the desired smooth transition from a standby to full load operation, as illustrated by line 51.

The system can be embodied in the form of computer-implemented processes and apparatuses for practicing those processes. The system can also be embodied in the form of computer program code containing instructions, embodied in tangible media, such as floppy diskettes, CD-ROMs, hard drives, or any other computer-readable storage medium, wherein, when the computer program code loaded into and executed by a computer, the computer becomes an apparatus for practicing the invention. The system can also be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an apparatus for use with the system. When the implementation is on a general-purpose microprocessor, the computer program code segments configure the microprocessor to create specific logic circuits.

The voltage control strategies may be used individually or in combination to achieve various benefits. By employing these strategies, the cost of the overall system may be reduced since reliance on converters can be minimized, operational cost may be reduced due to the decreased losses that are typically associated with converters, dynamic range may be improved, and excessive transients may be minimized thereby protecting the battery and the SOFC stack.

While the description has focused on the integration of a SOFC to a low impedance battery, it is equally applicable to PEM, direct methanol, alkaline, molten carbonate, or other fuel cell technologies.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

**Claims**

1. A method for controlling a fuel cell system, comprising:

   supplying an amount of fuel to a fuel cell stack;
   supplying an amount of oxidant to said fuel cell stack; and
   controlling said amount of said fuel supplied to said fuel cell stack to attain a desired voltage output, wherein said desired voltage is at least partially based upon an input current and voltage for a battery in electrical communication with said fuel cell stack.

2. The method for controlling a fuel cell system of Claim 1, wherein said fuel cell stack is in direct electrical communication with said battery.

3. The method for controlling a fuel cell system of Claim 1, further comprising controlling said amount of oxidant supplied to said fuel cell stack based upon a desired voltage output.

4. The method for controlling a fuel cell system of Claim 3, wherein said controlling said amount of oxidant further comprises recycling cathode effluent to said fuel cell stack.

5. The method for controlling a fuel cell system of Claim 3, wherein said controlling said amount of oxidant further comprises adjusting a flow rate of said oxidant.

6. The method for controlling a fuel cell system of Claim 1, wherein said controlling said amount of fuel further comprises adjusting a flow rate of said fuel.

7. The method for controlling a fuel cell system of Claim 1, wherein said controlling said amount of fuel further comprises recycling anode effluent to said fuel cell stack.

8. The method for controlling a fuel cell system of Claim 1, wherein said fuel is a reformed fuel, and wherein controlling said amount of fuel further comprises introducing unreformed fuel and a second reactant to a reformer, reforming said unreformed fuel to produce said reformed fuel, and adjusting an unreformed fuel concentration in said reformer.

9. The method for controlling a fuel cell system of Claim 1, further comprising producing electricity and modulating said electricity to attain said desired voltage.

10. The method for controlling a fuel cell system of Claim 9, wherein said modulating further comprises using a device selected from the group consisting of pulse width modulators, converters, transistors, switches, resistors, and combinations comprising at least one of the foregoing devices.

11. The method for controlling a fuel cell system of Claim 1, further comprising managing electrical loads in electrical communication with said fuel cell stack.

12. The method for controlling the fuel cell system of Claim 1, wherein said battery is a lithium battery.

13. The method for controlling the fuel cell system of Claim 1, wherein said fuel cell stack is a solid oxide fuel cell stack.

14. A method for controlling a fuel cell system, comprising:

supplying an amount of fuel to a fuel cell stack;

supplying an amount of oxidant to said fuel cell stack;
producing electricity; and
modulating said electricity to attain a desired voltage, wherein said desired voltage is at least partially based upon an input current and voltage for a battery in electrical communication with said fuel cell stack.

15. The method for controlling a fuel cell system of Claim 14, wherein said modulating is pulse width modulating.

16. The method for controlling a fuel cell system of Claim 14, wherein said modulating further comprises using a device selected from the group consisting of converters, transistors, switches, resistors, and combinations comprising at least one of the foregoing devices.

17. The method for controlling a fuel cell system of Claim 14, further comprising managing electrical loads in electrical communication with said fuel cell stack.

18. The method for controlling the fuel cell system of Claim 14, wherein said battery is a lithium battery.

19. The method for controlling the fuel cell system of Claim 14, wherein said fuel cell stack is a solid oxide fuel cell stack.

20. A method for controlling a fuel cell system, comprising:

supplying an amount of fuel to a fuel cell stack;
supplying an amount of oxidant to said fuel cell stack; and
controlling said amount of said oxidant supplied to said fuel cell stack to attain a desired voltage output, wherein said desired voltage is at least partially based upon an input current and voltage for a battery in electrical communication with said fuel cell stack.

21. The method for controlling a fuel cell system of Claim 20, wherein controlling said amount of oxidant further comprises recycling cathode effluent to said fuel cell stack.

22. The method for controlling a fuel cell system of Claim 20, wherein controlling said amount of oxidant further comprises adjusting a flow rate of said oxidant.

23. The method for controlling a fuel cell system of Claim 20, further comprising producing electricity and modulating said electricity to attain said desired voltage.

**24.** The method for controlling a fuel cell system of Claim 20, wherein said modulating further comprises using a device selected from the group consisting of pulse width modulators, converters, transistors, switches, resistors, and combinations comprising at least one of the foregoing devices.

**25.** The method for controlling a fuel cell system of Claim 20, further comprising managing electrical loads in electrical communication with said fuel cell stack.

**26.** The method for controlling the fuel cell system of Claim 20, wherein said battery is a lithium battery.

**27.** The method for controlling the fuel cell system of Claim 20, wherein said fuel cell stack is a solid oxide fuel cell stack.

**28.** A method for controlling a fuel cell system, comprising:

    supplying an amount of fuel to a fuel cell stack;
    supplying an amount of oxidant to said fuel cell stack;
    producing electricity; and
    managing an electrical load drawn on said fuel cell stack to attain a desired voltage, wherein said desired voltage is at least partially based upon an input current and voltage for a battery in electrical communication with said fuel cell stack.

**29.** The method for controlling a fuel cell system of Claim 28, further comprising charging said battery with at least a portion of said electricity.

**30.** The method for controlling the fuel cell system of Claim 28, wherein said battery is a lithium battery.

**31.** The method for controlling the fuel cell system of Claim 28, wherein said fuel cell stack is a solid oxide fuel cell stack.

**32.** A vehicle power system, comprising:

    a fuel supply and an oxidant supply in fluid communication with a fuel cell stack; and
    a battery disposed in direct electrical communication with said fuel cell stack.

**33.** The vehicle power system of Claim 32, further comprising a controller in operable communication with said fuel cell stack.

**34.** The vehicle power system of Claim 32, wherein said battery is a lithium battery.

**35.** The vehicle power system of Claim 32, wherein said fuel cell stack is a solid oxide fuel cell stack.

# Fig.1.

# Fig.2.

# Fig.4.

200

Isolation Device

111

240

Solid Oxide Fuel Cell Stack

220 — LiPo Battery Pack

DC-DC Converter

42V Load

Battery ECU

260

225

System Controller

250

230

210

Reformer

14V Alternator

14V Battery

14V Load

150

290

280

270

EP 1 233 468 A2

# Fig.3.

# Fig.5.

# Fig.6.

# Fig.7.

Full
Power

Power

0

Time

# Fig.8.

100%

Duty Cycle

0

Time

# Fig.9.

55

52

50

51

Voltage

40

Time